## Europäisches Patentamt
## European Patent Office
## Office européen des brevets

(19)

(11) Publication number: **0 292 192 B1**

(12)

# EUROPEAN PATENT SPECIFICATION

(45) Date of publication of patent specification :
**07.08.91 Bulletin 91/32**

(51) Int. Cl.⁵: **B65D 65/38, C08J 5/18,**
**C08K 3/26**

(21) Application number : **88304290.5**

(22) Date of filing : **12.05.88**

(54) Packaging sheet material.

(30) Priority : **13.05.87 JP 116459/87**

(43) Date of publication of application :
**23.11.88 Bulletin 88/47**

(45) Publication of the grant of the patent :
**07.08.91 Bulletin 91/32**

(84) Designated Contracting States :
**DE FR GB IT NL**

(56) References cited :
**DE-A- 1 704 832**
**US-A- 4 536 425**

(56) References cited :
**PATENT ABSTRACTS OF JAPAN, unexamined
applications, M section, vol. 10, no. 92, April 9,
1986 THE PATENT OFFICE JAPANESE GOV-
ERNMENT page 57 M 468
PATENT ABSTRACTS OF JAPAN, unexamined
applications, C section, vol. 10, no. 269, Sep-
tember 12, 1986 THE PATENT OFFICE JAPAN-
ESE GOVERNMENT page 140 C 372**

(73) Proprietor : **NISSHO & CO. LTD.**
**2nd Fl., Suzuno Bldg. 11 Konya-Cho Kanda**
**Chiyoda-Ku Tokyo (JP)**

(72) Inventor : **Someya, Nobuo**
**16-6, Kami Ikebuburo 3-chome**
**Toshima-ku Tokyo (JP)**

(74) Representative : **Silverman, Warren et al**
**HASELTINE LAKE & CO. Hazlitt House 28**
**Southampton Buildings Chancery Lane**
**London WC2A 1AT (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a packaging sheet material for perishable goods and more specifically to a packaging sheet which is able to maintain the freshness of perishable goods.

A variety of methods has been employed for packaging perishable goods to keep them in a satisfactory condition with respect in particular to freshness during transportation or storage. In a typical method, based on the recognition that fresh vegetables release ethylene which acts as an additional maturation hormone and that removal of such hormone extends the period during which such vegetables retain a manifestation of freshness when stored in a refrigerator, materials with a high adsorptivity with respect to such hormones are used. For example, it is a practice to dispose activated carbon particles or a sheet formed therefrom in a bag in which fresh food is contained so that additional maturation substances which are released can be removed from contact with vegetables within the bag. Another example of removal of additional maturation catalysts or stimulants is disclosed, for instance, in Japanese Patent Published Disclosure No.61.93835 wherein porous materials having fine pores are subjected to an oxidation process to render them adsorptive with an ability to absorb molecules of low number molecular weight and which indicate oxidation-catalytic action. Furthermore the german document DE-A-1704832 describes a thermoplastics film with embeded calcium carbonat grains which is used as packaging material.

The known adsorptive materials, however, do not show ability to maintain freshness for a sufficient length of time and are expensive to manufacture. They are thus not always satisfactory. In addition, there is generally a need to employ other conventional adsorptive materials so that the packaging materials possess other functions such as a sterilizing effect, as well as the adsorptivity as disclosed in the above publication. This increases the manufacturing cost of the adsorptive materials and is counter to the demand for decreased manufacturing cost of these adsorptive materials.

It is therefore an object of the present invention to provide a novel sheet material for packaging which has an excellent freshness-keeping capability for perishable goods and which can be produced at a low cost.

According to the present invention, there is provided a packaging material for perishable goods characterised in that it is made of a sheet-forming material mixed with coral sand.

The present invention is based on the recognition that coral sands are made up of porous particles and exhibit such excellent properties as a bacterial-growth suppressing function. At the same time, the sheet is provided with, for example, a bacterial-growth suppressing function. In practising the present invention, coral sand is mixed with the raw material from which the packaging sheet for perishable goods is to be produced thereby to impart to the sheet excellent freshness-keeping properties. The coral sand may occur naturally as such or be produced from coral by grinding. The sheet-forming raw material may be of synthetic resin origin, for example being formed from polyethylene as a film, or be formed of a fibrous material, usually of cellulosic origin. The coral sand may have a grain size in the range of from 100 to 2000 mesh, preferably, 50 to 500 mesh. Microscopic observation indicates that coral sand particles possess a large number of pores of a diameter ranging from 10 to 50 micrometer. Owing to the presence of these pores, coral sand particles have an extremely large surface area.

Coral is a hard, stony substance formed from the massed skeletons of minute marine polyps and contains calcium carbonate as its main ingredient, calcium phosphate as a second ingredient, and, in trace amounts, elements such as potassium, magnesium, iron, sodium and strontium.

Properties of coral sand of relevance to keeping perishable goods fresh are as follows.

(a) Function of calcium carbonate as a main ingredient :

Taking as an example hydrogen sulphide released from fresh broccoli, the following chemical reaction results :

$$H_2S + 2O_2 \rightarrow SO_3 + H_2O$$
$$SO_3 + CaCO_3 \rightarrow CaSO_4 + CO_2$$

The resulting carbon dioxide serves to suppress maturation of the fresh broccoli.

(b) Function of the porous structure of coral sand :

As mentioned above, coral sand particles have fine pores with a diameter such that they have an absorptivity for gaseous materials. These fine pores serve to absorb gas released from fresh goods which becomes reacted with the calcium carbonate present.

(c) pH adjustment function of calcium carbonate in the coral sand :

Calcium carbonate serves to change the atmosphere of the environment in which fresh goods are stored and to change ambient pH from acid to alkaline. This suppresses oxidation of the fresh goods and maintains their freshness.

(d) Function of minerals contained in the coral sand :

The coral sand contains various minerals which serve to maintain the freshness of fresh goods. As indicated above, in the practice of this invention, natural coral sand is mixed in with the raw materials for making packaging paper for bags or the like for perishable goods and imparts to such bags good freshness-keeping and sterilizing properties, inter alia. The raw materials used and processing steps involved ensure that a packaging bag for perishable goods which exhibits excellent freshness-keeping ability can be obtained at a low price.

The following Example illustrates this invention.

EXAMPLE

Coral sand was mixed with the raw materials needed to form a polyethylene sheet. Then a packaging bag for perishable goods was made from the sheet. This bag was examined for its freshness-keeping property. The result was that the freshness-keeping ability of the bag was found to be superior to that of conventional freshness-keeping materials. The grain size of the coral sand used was within a preferred range of from 100 to 2000 mesh, and more preferably was in the range of from 150 to 500 mesh.

When packaging is formed of paper or cardboard, it is preferred that the coral sand be mixed into the raw material of such packaging, rather than be employed in any other way, thereby to obtain the desired good freshness-keeping ability.

**Claims**

1. A packaging sheet material for perishable goods, characterised in that it is made of a sheet-forming material mixed with coral sand.

2. The packaging sheet material as set forth in claim 1, wherein said sheet-forming material is a synthetic-resin which is subsequently formed into a film.

3. The packaging sheet material as set forth in claim 2, wherein said synthetic resin is polyethylene.

4. The packaging sheet material as set forth in claim 1, wherein said sheet material is made from a sheet-forming material of fibrous character.

5. The packaging sheet material as set forth in any preceding claim, wherein said coral sand has a grain size in the range of from 100 to 2000 mesh.

6. The packaging sheet material as set forth in claim 5, wherein said coral sand has a grain size in the range of from 150 to 500 mesh.

7. The packaging sheet material as set forth in any one of claims 1 to 4, wherein said coral sand is a naturally occurring sand.

**Patentansprüche**

1. Ein bahnenförmiges Verpackungsmaterial für leicht verderbliche Waren, dadurch **gekennzeichnet**, daß es aus einem bahnenbildenden Material, das mit Korallensand gemischt wurde, hergestellt ist.

2. Das bahnenförmige Verpackungsmaterial nach Anspruch 1, bei dem das bahnenbildende Material ein synthetisches Harz, das nachfolgend zu einem Film geformt wird, ist.

3. Das bahnenförmige Verpackungsmaterial nach Anspruch 2, bei dem das synthetische Harz Polyethylen ist.

4. Das bahnenförmige Verpackungsmaterial nach Anspruch 1, bei dem das Bahnenmaterial aus einem bahnenbildenden Material mit fibrösem Charakter hergestellt ist.

5. Das bahnenförmige Verpackungsmaterial nach einem der vorhergehenden Ansprüche, bei dem der Korallensand eine Körnchengröße im Bereich von 100 bis 2000 mesh besitzt.

6. Das bahnenförmige Verpackungsmaterial nach Anspruch 1, bei dem der Korallensand eine Körnchengröße in dem Bereich von 150 bis 500 mesh besitzt.

7. Das bahnenförmige Verpackungsmaterial nach einem der Ansprüche 1 bis 4, bei dem der Korallensand ein natürlich vorkommender Sand ist.

**Revendications**

1. Matériau d'emballage en feuille pour des denrées périssables, **caractérisé** en ce qu'il est fait d'un matériau de formation de feuille mélangé avec du sable corallien.

2. Matériau d'emballage en feuille selon la revendication 1, dans lequel ledit matériau de formation de feuille est une résine synthétique à laquelle on donne ensuite la forme d'un film.

3. Matériau d'emballage en feuille selon la revendication 2, dans lequel ladite résine synthétique est du polyéthylène.

4. Matériau d'emballage en feuille selon la revendication 1, dans lequel ledit matériau en feuille est fait à partir d'un matériau de formation de feuille de caractère fibreux.

5. Matériau d'emballage en feuille selon l'une quelconque des revendications précédentes, dans lequel ledit sable corallien a une taille de grains située dans la plage comprise entre 100 et 2000 mesh.

6. Matériau d'emballage en feuille selon la revendication 5, dans lequel ledit sable corallien a une taille de grains comprise dans la plage située entre 150 et 500 mesh.

7. Matériau d'emballage en feuille selon l'une quelconque des revendications 1 à 4, dans lequel ledit sable corallien est un sable naturel.